# EUROPEAN PATENT SPECIFICATION

(11) **EP 3 574 207 B1**
(45) Date of publication and mention of the grant of the patent: **13.05.2020**
(21) Application number: 17811927.7
(22) Date of filing: 06.12.2017
(51) Int. Cl.: F03B 3/02, F03B 11/00, F03B 3/00, F03B 3/12

(54) **RUNNER FOR A HYDRAULIC TURBINE OR PUMP**
LÄUFER FÜR EINE HYDRAULIKTURBINE ODER HYDRAULIKPUMPE
ROUE POUR UNE TURBINE OU UNE POMPE HYDRAULIQUE

(30) Priority: 24.01.2017 US 201762449835 P
(43) Date of publication of application: 04.12.2019
(73) Proprietor: Voith Patent GmbH, 89522 Heidenheim (DE)
(72) Inventor: DUNBAR, Kenneth, Manchester 19845 (US); MC GINNIS, Daniel, Hanover 17331 (US); SEIFARTH, John, York 17408 (US); KOTZMAN, Benjamin, New Oxford 17350 (US)
(74) Representative: Voith Patent GmbH - Patentabteilung
(86) International application number: PCT/EP2017/081658
(87) International publication number: WO 2018/137820

(56) References cited:
- EP-A1- 1 744 018
- JP-A- 2002 070 713
- US-A- 3 132 839
- US-A- 5 879 130

## Description

The present invention relates generally to hydroelectric turbine or pump installations. More particularly, this invention pertains to hydroelectric installations with means for enhancing the level of dissolved gas in water passing through the turbine or pump.

A significant environmental problem for many hydroelectric facilities is the water quality of discharges. Various attempts have been made to enhance the level of dissolved oxygen in discharged water of hydroelectric installations, see e.g. US 5 879 130. For example, U.S. Pat. No. 5,924,842 to Beyer, James R. discloses a runner for a Francis turbine comprising a crown; a band substantially concentric with the crown; and a plurality of blades extending between crown and the band at spaced intervals along the crown, each blade fixedly secured to the crown at an inner edge and to the band at a distal outer edge, each blade having a water directing surface defined by a pressure side, an opposite facing suction side, a leading edge and a spaced apart trailing edge, at least one of the blades including: a leading edge blade portion having a rear edge in which a first slot is machined along at least a portion of the rear edge; a trailing portion having a front edge in which a second slot is machined along at least a portion of the front edge; wherein the trailing portion is fixedly secured to the leading blade portion along the front edge and the rear edge, respectively, so that the first and second channels cooperate to form an integral passage in the at least one of the blades; and means for discharging an oxygen containing gas from the integral passage to a location adjacent the trailing edge. These means include a plurality of discharge passages extending from the integral passage to the trailing edge.

The objective of the mentioned state of the art is to increase the level of dissolved oxygen downstream of the turbine or pump by introducing an oxygen containing gas into the water passing through the unit. The objective of the present invention is to increase the level of dissolved oxygen downstream of the turbine or pump over the level of dissolved oxygen achieved by state of the art.

The present invention provides a runner of a hydraulic turbine or pump, which is capable of dissolving more oxygen than the runners according to the state of the art.

The inventors recognized that the amount of oxygen containing gas flowing towards the trailing edge depends on the difference between the pressure at the inlet of the gas passage (normally atmospheric pressure) and the pressure at the trailing edge. However any obstacle to the gas flow located in the gas passage between these two locations will cause a pressure drop and therefore decrease the gas flow and thus the amount of dissolved oxygen. The inventors recognized that the main obstacle to the gas flow of the prior art is the plurality of discharge passages each of them consisting in a narrow channel towards the trailing edge. This leads to a sub optimal gas flow and thus to a sub optimal amount of dissolved oxygen in the prior art.

The problem is solved by a runner according to claim 1. Other favorable implementations of the invention are disclosed in the depended claims.

The inventors have recognized that the problem can be solved by replacing the plurality of narrow discharge passages by a continuous opening at the trailing edge that extends over at least 15% of the developed length of the trailing edge.

The invention will hereinafter be described in conjunction with the appended drawings:
Fig. 1 is a cross-sectional view of an axial turbine runner according to Figure 25 of US 5,924,842 (Prior art);
Fig. 2 is a cross-sectional view of a runner blade according to an embodiment of the present invention;
Fig. 3 shows section A and different kinds of embodiments of section B of the runner blade according to Figure 2;
Fig. 4 is a cross-sectional view of a runner blade according to another embodiment of the present invention;
Fig. 5 shows section A of the runner blade according to Figure 4;
Fig. 6 is a cross-sectional view of a runner blade according to another embodiment of the present invention;
Fig. 7 is a cross-sectional view of a Francis turbine runner according to the present invention;
Fig. 8 is a cross-sectional view of an axial turbine runner according to the present invention.

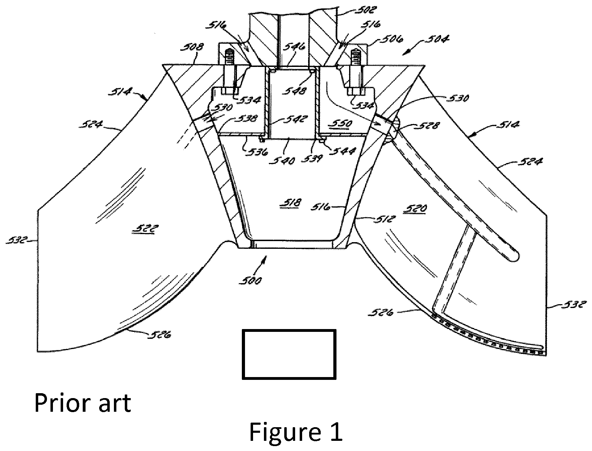

Figure 1 displays a runner according to the prior art (Figure 25 of US 5,924,842). Clearly visible is the plurality of the narrow discharge passages located at the trailing edge which is designated as 526.

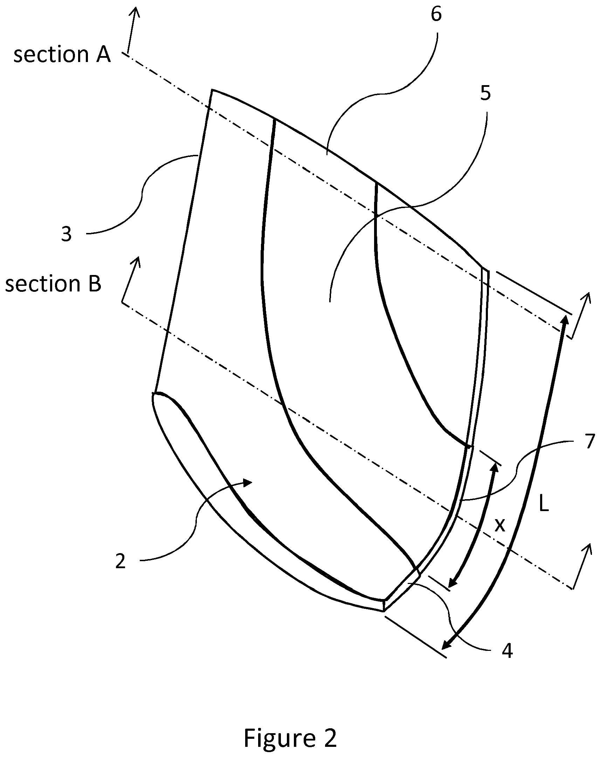

Figure 2 displays schematically a cross-sectional view of a runner blade according to present invention. The blade is designated as 2. The blade 2 has a leading edge 3 and a trailing edge 4 meaning that the fluid entering the runner flows from the leading edge 3 towards the trailing edge 4. The fluid flow is divided by the blade 2 whereas one side of the blade 2 forms the pressure surface and the other side the suction surface. The blade 2 shown in figure 2 contains a gas passage which is designated as 5. The blade 2 has a gas inlet apertures designated as 6.

At the trailing edge 4, there is a continuous opening designated as 7. The continuous opening 7 extends over at least 15% of the developed length of the trailing edge 4 (x/L >= 0.15). The gas passage 5 is capable of delivering oxygen containing gas from the gas inlet aperture 6 to the continuous opening 7. The gas flowing in through the gas inlet apertures 6 is admitted through the continuous opening 7 within the trailing edge 4 into the fluid i.e. water passing the trailing edge 4. Inlet aperture 6, gas passage 5 and the continuous opening 7 are forming a smooth passage through the blade minimizing pressure losses as the gas flows through the blade. This results in increased levels of dissolved oxygen in the water passing the trailing edge 4.

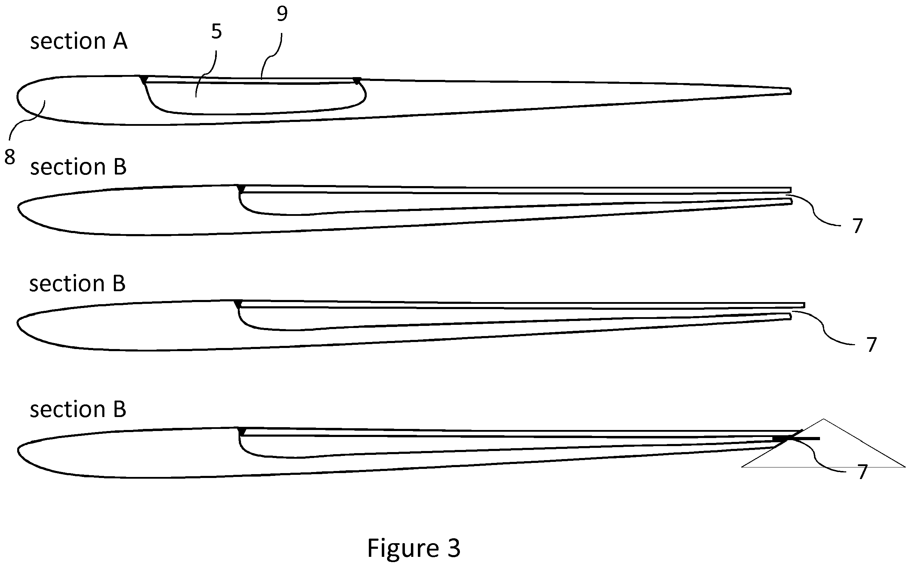

Figure 3 displays schematically cross-sectional views through the blade 2 of figure 2 along the marked sections A and B. Figure 3 displays three different embodiments of the continuous opening 7 which is displayed in three different views along section B. In the view along section A it can be seen that the blade 2 comprises a base part which is designated by 8 and a cover part which is designated by 9. The base part 8 includes either the entire suction side or pressure side surface as well as the entire leading edge surface and a substantial portion of the trailing edge surface. A cavity is machined or cast into the base part 8. The thinner cover part 9 is attached to the base part 5 thus forming the gas passage 5. The cover part 9 may be metal or composite material, may be cast formed or machined and may be attached by welding or by a bonding material (epoxy, glue, etc.). The topmost cross-sectional view along section B shows a first embodiment of the continuous opening 7. The continuous opening 7 is confined by the pressure and suction side surfaces which meet at the trailing edge 4. In this first embodiment the pressure and suction side surfaces are ending respectively at the same distance measured from the leading edge 3 along the section's camberline. The middle cross-sectional view along section B shows a second embodiment of the continuous opening 7. In this second embodiment the pressure side surface extends further than the suction side surface measured from the leading edge 3 along the section's camberline. The bottom cross-sectional view along section B shows a third embodiment of the continuous opening 7. In the third embodiment the trailing edge 4 in the region of opening 7 is profiled to minimize vortex shedding. Of course this kind of profile can be present over the whole length of the trailing edge 4.

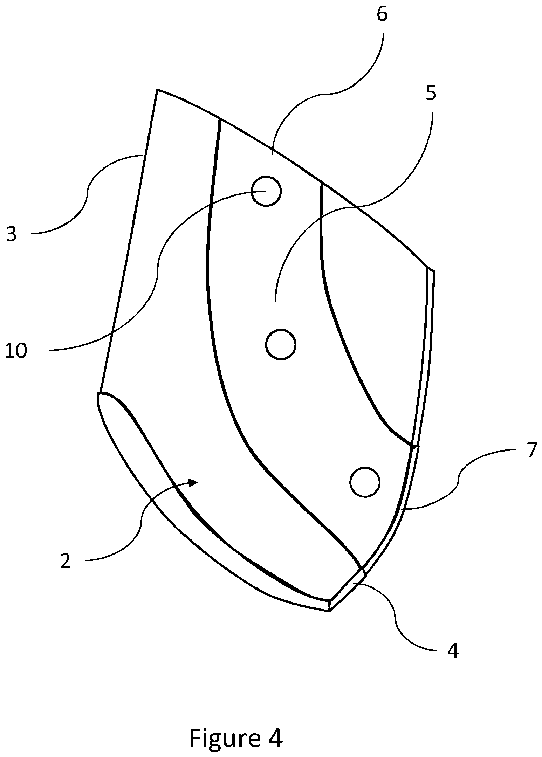

Figure 4 displays schematically a cross-sectional view of a runner blade according to present invention in another embodiment. Additionally to the blade of figure 2 the embodiment according figure 4 includes three spacer pieces one of them being designated as 10.

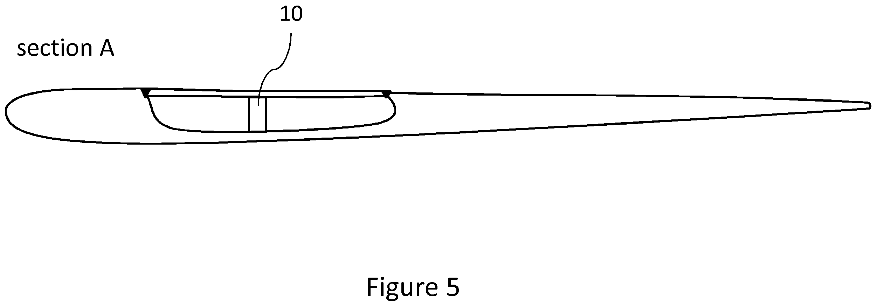

Figure 5 shows a cross-sectional view along section A displaying a side view of the spacer piece 10. Spacer pieces 10 are positioned within the gas passage 5 as needed to avoid the buckling of the cover part 9. The spacer pieces 10 could be integral to the base part 8 or fixedly attached to either the base part 8 or cover part 9. It is clear that the number of spacer pieces 10 is not restricted to the number of three but there can be any number of spacer pieces 10.

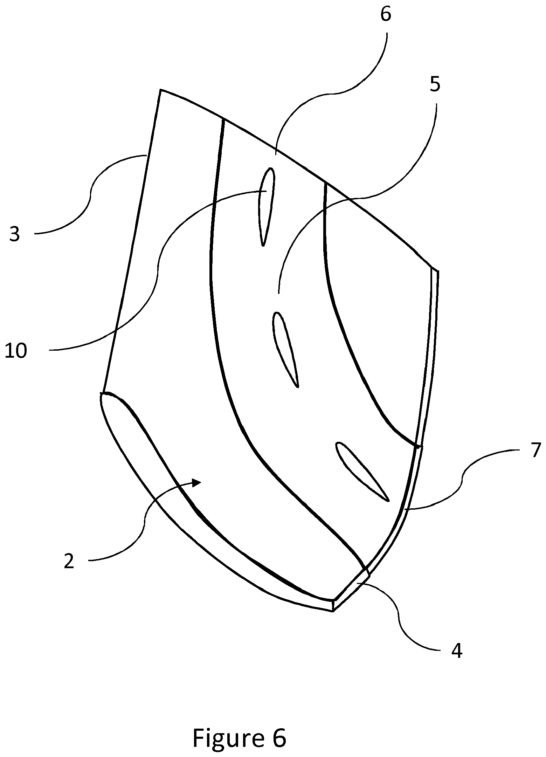

The inventors have realized that the spacer pieces 10 are forming an obstacle to the gas flow. Therefore it is favorable that the spacer pieces are of aerodynamic shape. Figure 6 shows the runner according to the present invention featuring aerodynamically shaped spacer pieces 10.

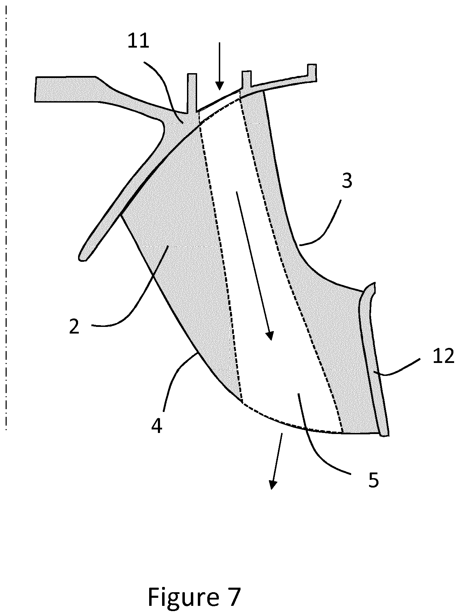

Figure 7 displays schematically a cross-sectional view of a Francis turbine runner according to the present invention. The runner crown is designated as 11. A runner blade 2 extends between the crown 11 and the band designated as 12. The gas inlet aperture 6 is located in the runner crown 11. The arrows are indicating the gas flow. Gas passage, leading and trailing edge are designated as usually.

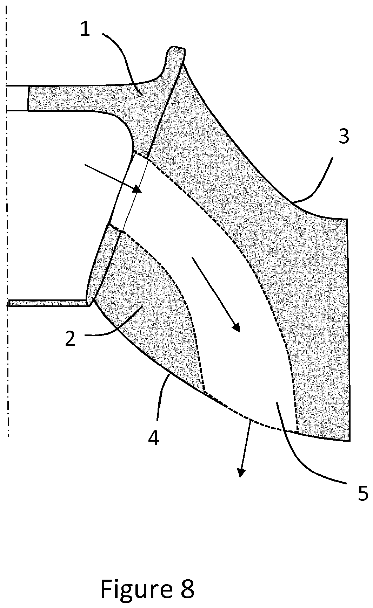

Figure 8 displays schematically a cross-sectional view of an axial flow turbine runner according to the present invention. The runner hub is designated as 1. A runner blade 2 extends radially from the hub 1. The gas inlet aperture 6 is located in the runner hub 1. The arrows are indicating the gas flow. Gas passage, leading and trailing edge are designated as usually.

It is clear that the embodiments shown in the figures are examples of a much broader variety of embodiments each employing the inventive ideas. For example there could be several separate gas passages through one blade leading from separate gas inlet apertures to several separate continuous openings located at different portions of the trailing edge. Or a gas inlet could be located in the band of a Francis turbine.

The invention is also not restricted to turbines and pumps of the Francis type, or fixed blade axial turbines and pumps, but extends also to axial flow Kaplan turbines and pumps of the Kaplan type.

In principle any oxygen containing gas can be used, for instance air or pure oxygen.

Finally it is noted that the present invention is not only capable of increasing the amount of dissolved oxygen in a higher magnitude compared with the prior art, but saves also manufacturing costs. According to the invention, the blade is constructed from only two main parts. This simplifies the construction by minimizing the number of surfaces to be joined. The gas passage at trailing edge is the result of locally spacing apart the cover part and base part. This eliminates the need for, and complexity of many small gas passages in the trailing edge.

## Claims

1. A runner for a hydraulic turbine or pump, comprising a plurality of blades (2), each blade (2) being defined by a pressure surface, an oppositely facing suction surface, a leading edge (3) and a spaced apart trailing edge (4), at least one of the blades (2) having means for supplying a flow of oxygen containing gas to the trailing edge (4) of the same blade (2) whereas said means comprise a gas inlet aperture (6) and a gas passage (5) **characterized in that** the same blade (2) comprises a continuous opening (7) in the trailing edge (4) to admit gas out of the gas passage (5) to the passing fluid during operation of the runner whereas the continuous opening (7) extends over at least 15% of the developed length of the trailing edge (4).

2. The runner of claim 1, wherein the runner is an axial flow runner, comprising a hub (1) and wherein the blades (2) are extending from the hub (1) at circumferentially spaced intervals.

3. The runner of claim 1, wherein the runner is a Francis turbine, comprising a crown (11) and a band (12) and wherein the blades (2) are extending from the crown (11) to the band (12) at circumferentially spaced intervals.

4. The runner of claim 3 wherein a gas inlet aperture (6) is located within the crown (11).

5. The runner according to claim 3 or 4, wherein a gas inlet aperture (6) is located within the band (12).

6. The runner of claim 2, wherein a gas inlet aperture (6) is located within the hub (1).

7. The runner of one of the preceding claims, wherein in the region of the continuous opening (7) the pressure side surface extends further than the suction side surface measured from the leading edge (3) along the section's camberline.

8. The runner of one of the preceding claims, wherein the blade (2) having means for supplying a flow of oxygen containing gas to the trailing edge (4) comprises a base part (8) and a cover part (9) where the base part (8) is of single piece construction including the entire leading edge (3), the entire pressure side, as well as a portion of the trailing edge surface (4), and where the base part (8) contains a cavity and the cover part (9) is attached to the base part (8) above the cavity to form the gas passage (5).

9. The runner of one of claims 1 to 8, wherein the blade (2) having means for supplying a flow of oxygen containing gas to the trailing edge (4) comprises a base part (8) and a cover part (9) where the base part (8) is of single piece construction including the entire leading edge (3), the entire suction side, as well as a portion of the trailing edge surface (4), and where the base part (8) contains a cavity and the cover part (9) is attached to the base part (8) above the cavity to form the gas passage (5).

10. The runner of claim 8 or 9, wherein at least one spacer piece (10) is located between the base part (8) and the cover part (9) within the gas passage (5).

## Patentansprüche

1. Laufrad für eine Hydraulikturbine oder -pumpe, mehrere Schaufeln (2) umfassend, wobei jede Schaufel (2) durch eine Druckfläche, eine entgegengesetzt ausgerichtete Saugfläche, eine Vorderkante (3) und eine davon beabstandete Hinterkante (4) definiert ist, wobei mindestens eine der Schaufeln (2) eine Einrichtung für die Zufuhr einer Gas enthaltenden Sauerstoffströmung zur Hinterkante (4) derselben Schaufel (2) aufweist, wobei die Einrichtung eine Gaseinlassöffnung (6) und einen Gasdurchgang (5) umfasst, **dadurch gekennzeichnet, dass** dieselbe Schaufel (2) eine durchgehende Öffnung (7) in der Hinterkante (4) umfasst, um Gas aus dem Gasdurchgang (5) während des Betriebs des Laufrads zum vorbeiströmenden Fluid zuzulassen, wobei sich die durchgehende Öffnung (7) über mindestens 15 % der entwickelten Länge der Hinterkante (4) erstreckt.

2. Laufrad nach Anspruch 1, wobei das Laufrad ein axiales Strömungslaufrad ist, das eine Nabe (1) umfasst, und wobei sich die Schaufeln (2) von der Nabe (1) in Umfangsrichtung beabstandet erstrecken.

3. Laufrad nach Anspruch 1, wobei das Laufrad eine Francis-Turbine ist, die einen Kranz (11) und ein Band (12) umfasst, und wobei sich die Schaufeln (2) vom Kranz (11) zum Band (12) in Umfangsrichtung beabstandet erstrecken.

4. Laufrad nach Anspruch 3, wobei sich die Gaseinlassöffnung (6) innerhalb des Kranzes (11) befindet.

5. Laufrad nach Anspruch 3 oder 4, wobei sich die Gaseinlassöffnung (6) innerhalb des Bands (12) befindet.

6. Laufrad nach Anspruch 2, wobei sich die Gaseinlassöffnung (6) innerhalb der Nabe (1) befindet.

7. Laufrad nach einem der vorstehenden Ansprüche, wobei sich im Bereich der durchgehenden Öffnung (7) die Druckseitenfläche von der Vorderkante (3) aus gemessen entlang der Wölbungslinie des Abschnitts weiter als die Saugseitenfläche erstreckt.

8. Laufrad nach einem der vorstehenden Ansprüche, wobei die Schaufel (2), die eine Einrichtung für die Zufuhr einer Gas enthaltenden Sauerstoffströmung zur Hinterkante (4) aufweist, ein Unterteil (8) und ein Abdeckungsteil (9) umfasst, wobei das Unterteil (8) einstückig ist und die gesamte Vorderkante (3), die gesamte Druckseite sowie einen Abschnitt der Hinterkantenfläche (4) enthält, wobei das Unterteil (8) einen Hohlraum enthält und das Abdeckungsteil (9) über dem Hohlraum am Unterteil (8) befestigt ist, um den Gasdurchgang (5) auszubilden.

9. Laufrad nach einem der Ansprüche 1 bis 8, wobei die Schaufel (2), die eine Einrichtung für die Zufuhr einer Gas enthaltenden Sauerstoffströmung zur Hinterkante (4) aufweist, ein Unterteil (8) und ein Abdeckungsteil (9) umfasst, wobei das Unterteil (8) einstückig ist und die gesamte Vorderkante (3), die gesamte Saugseite sowie einen Abschnitt der Hinterkantenfläche (4) enthält, und wobei das Unterteil (8) einen Hohlraum enthält und das Abdeckungsteil (9) über dem Hohlraum am Unterteil (8) befestigt ist, um den Gasdurchgang (5) auszubilden.

10. Laufrad nach Anspruch 8 oder 9, wobei sich zumindest ein Abstandhalterstück (10) zwischen dem Unterteil (8) und dem Abdeckungsteil (9) innerhalb des Gasdurchgangs (5) befindet.

## Revendications

1. Roue pour une turbine ou une pompe hydraulique, comprenant une pluralité d'aubes (2), chaque aube (2) étant définie par une surface de pression, une surface d'aspiration faisant face à l'opposé, un bord d'attaque (3) et un bord de fuite (4) espacé, au moins une des aubes (2) ayant un moyen pour fournir un flux de gaz contenant de l'oxygène au bord de fuite (4) de la même aube (2), ledit moyen comprenant une ouverture d'entrée de gaz (6) et un passage de gaz (5), **caractérisé en ce que** la même aube (2) comprend une ouverture continue (7) dans le bord de fuite (4) pour admettre le gaz hors du passage de gaz (5) au fluide passant pendant le fonctionnement de la roue, l'ouverture continue (7) s'étendant sur au moins 15 % de la longueur développée du bord de fuite (4).

2. Roue selon la revendication 1, la roue étant une roue à écoulement axial, comprenant un moyeu (1) et les aubes (2) s'étendant à partir du moyeu (1) à des intervalles espacés circonférentiellement.

3. Roue selon la revendication 1, la roue étant une turbine Francis, comprenant une couronne (11) et une bande (12) et les aubes (2) s'étendant de la couronne (11) à la bande (12) à des intervalles espacés circonférentiellement.

4. Roue selon la revendication 3, l'ouverture d'entrée de gaz (6) étant située dans la couronne (11).

5. Roue selon la revendication 3 ou 4, une ouverture d'entrée de gaz (6) étant située dans la bande (12).

6. Roue selon la revendication 2, l'ouverture d'entrée de gaz (6) étant située dans le moyeu (1).

7. Roue selon l'une des revendications précédentes, dans la région de l'ouverture continue (7), la surface côté pression s'étendant plus loin que la surface côté aspiration mesurée à partir du bord d'attaque (3) le long de la ligne de cambrure de la section.

8. Roue selon l'une des revendications précédentes, l'aube (2) ayant un moyen pour fournir un flux de gaz contenant de l'oxygène au bord de fuite (4) comprenant une partie de base (8) et une partie de couvercle (9), la partie de base (8) étant de construction monobloc comprenant tout le bord d'attaque (3), tout le côté pression, ainsi qu'une partie de la surface de bord de fuite (4), et la partie de base (8) contenant une cavité et la partie de couvercle (9) étant fixée à la partie de base (8) au-dessus de la cavité pour former le passage de gaz (5).

9. Roue selon l'une des revendications 1 à 8, l'aube (2) ayant un moyen pour fournir un flux de gaz contenant de l'oxygène au bord de fuite (4) comprenant une partie de base (8) et une partie de couvercle (9), la partie de base (8) étant d'une construction monobloc comprenant tout le bord d'attaque (3), tout le côté aspiration, ainsi qu'une partie de la surface de bord de fuite (4), et la partie de base (8) contenant une cavité et la partie de couvercle (9) étant fixée à la partie de base (8) au-dessus de la cavité pour former le passage de gaz (5).

10. Roue selon la revendication 8 ou 9, au moins une pièce d'écartement (10) étant située entre la partie de base (8) et la partie de couverture (9) dans le passage de gaz (5).
